# EUROPEAN PATENT APPLICATION

(11) **EP 4 654 013 A1**
(43) Date of publication of application: **26.11.2025**
(21) Application number: 24215343.5
(22) Date of filing: 26.11.2024
(51) Int. Cl.: G06F 9/50

(54) **TECHNIQUES FOR SUPPORTING EXECUTION OF JOBS WITH CONTAINER ORCHESTRATION PLATFORMS**

(30) Priority: 21.05.2024 US 202418669831
(71) Applicant: Red Hat, Inc., Raleigh, NC 27601 (US)
(72) Inventor: GRIFFIN, Leigh, Raleigh, 27601 (US); ANTINORI, Paolo, Raleigh, 27601 (US)
(74) Representative: Murgitroyd & Company

(57) **Abstract**

A wrapped job including a computing job wrapped with one or more conditions associated with execution of the computing job may be received. Instructions to orchestrate execution of the computing job in a container may be generated based on the wrapped job. A processing device may modify execution of the computing job in response to detection at least one execution condition of the one or more conditions associated with execution of the computing job.

## Description

### TECHNICAL FIELD

Aspects of the present disclosure relate to techniques for supporting execution of jobs with container orchestration platforms and, more particularly, to controlling when jobs should start, stop, restart, migrate, or be terminated by a container orchestration platform based on conditions.

### BACKGROUND

A container orchestration platform may refer to a platform for automating, managing, and coordinating the deployment, scaling, and operations of multiple containers across multiple host systems. Typically, a container orchestration platform may be utilized for managing the lifecycle of containers, especially in large, dynamic environments. More generally, a container may refer to a lightweight, stand-alone, executable packages that includes everything needed to run a piece of software and orchestration may refer to the automated configuration, management, and coordination of complex systems, services, applications, and middle ware. Container orchestration usually includes a master node that manages worker nodes, where the containers are deployed. The master node may manage the cluster, schedule deployments, and maintain the desired state of the container ecosystem.

### SUMMARY

In accordance with a first aspect of the present disclosure, there is provided a method comprising: receiving a wrapped job comprising a computing job wrapped with a plurality of conditions associated with execution of the computing job; generating instructions to orchestrate execution of the computing job in a container based on the wrapped job; and modifying, by a processing device, execution of the computing job in response to detecting at least one execution condition of the plurality of conditions associated with execution of the computing job.

To modify execution of the computing job, the method may comprise at least one of starting, by the processing device, execution of the computing job, stopping, by the processing device, execution of the computing job, restarting, by the processing device, execution of the computing job, migrating, by the processing device, execution of the computing job from a first container to a second container, or terminating, by the processing device, execution of the computing job.

The at least one execution condition may comprise a first condition and a second condition joined by a Boolean operator.

The method may further comprise monitoring execution of the computing job to detect the at least one execution condition.

The at least one execution condition may comprise a budget for execution of the computing job and modifying execution of the computing job in response to detecting the at least one execution condition may comprise, stopping, by the processing device, execution of the computing job in response to execution of the job reaching the budget.

The at least one execution condition may comprise an execution start time and an execution stop time and modifying execution of the computing job in response to detecting the at least one execution condition may comprise starting, by the processing device, execution of the computing job at the execution start time and stopping, by the processing device, execution of the computing job at the execution stop time.

The at least one execution condition may comprise an amount of output generated by the computing job, an amount of input consumed by the computing job, or an amount of execution time for the computing job, and modifying execution of the computing job in response to detecting the at least one execution condition may comprise stopping, by the processing device, execution of the computing job in response to generation of the amount of output by the computing job, consumption of the amount of input by the computing job, or expiration of the amount of execution time for the computing job.

The plurality of conditions may include an orchestration condition and the instructions to orchestrate execution of the computing job in the container may be generated based on the orchestration condition.

The orchestration condition may comprise an application-level sharding condition.

The at least one execution condition may comprise one or more conditions in a service level agreement.

In accordance with a second aspect of the present disclosure, there is provided a system comprising: a memory; and a processing device, operatively coupled to the memory, configured to perform the method in accordance with the first aspect of the present disclosure. In particular, the system in accordance with the second aspect comprises: a memory; and a processing device, operatively coupled to the memory to: receive a wrapped job comprising a computing job wrapped with a plurality of conditions associated with execution of the computing job; generate instructions to orchestrate execution of the computing job in a container based on the wrapped job; and modify execution of the computing job in response to detecting at least one execution condition of the plurality of conditions associated with execution of the computing job.

To modify execution of the computing job, the processing device may be configured to carry out at least one of: start execution of the computing job, stop execution of the computing job, restart execution of the computing job, migrate execution of the computing job from a first container to a second container, or terminate execution of the computing job.

The at least one execution condition may comprise a first condition and a second condition joined by a Boolean operator.

The processing device may be further configured to monitor execution of the computing job to detect the at least one execution condition.

The at least one execution condition may comprise a budget for execution of the computing job and to modify execution of the computing job in response to detecting the at least one execution condition, the processing device may be configured to stop execution of the computing job in response to execution of the job reaching the budget.

The at least one execution condition may comprise an execution start time and an execution stop time and to modify execution of the computing job in response to detecting the at least one execution condition, the processing device may be configured to start execution of the computing job at the execution start time and stop execution of the computing job at the execution stop time.

The at least one execution condition may comprise an amount of output generated by the computing job, an amount of input consumed by the computing job, or an amount of execution time for the computing job, and to modify execution of the computing job in response to detecting the at least one execution condition, the processing device may be configured to stop execution of the computing job in response to generation of the amount of output by the computing job, consumption of the amount of input by the computing job, or expiration of the amount of execution time for the computing job.

The one or more conditions may include an orchestration condition and the instructions to orchestrate execution of the computing job in the container may be generated based on the orchestration condition.

The orchestration condition may comprise an application-level sharding condition.

The at least one execution condition may comprise one or more conditions in a service level agreement.

In accordance with a third aspect of the present disclosure, there is provided a non-transitory computer-readable storage medium including instructions that, when executed by a processing device, cause the processing device to perform the method in accordance with the first aspect of the present disclosure or its embodiments. In particular, the non-transitory computer-readable storage medium in accordance with the third aspect, includes instructions that, when executed by a processing device, cause the processing device to receive a wrapped job comprising a computing job wrapped with one or more conditions associated with execution of the computing job; generate instructions to orchestrate execution of the computing job in a container based on the wrapped job; and modify, by the processing device, execution of the computing job in response to detecting at least one execution condition of the one or more conditions associated with execution of the computing job.

To modify execution of the computing job, the instructions may cause the processing device to carry out at least one of: start execution of the computing job, stop execution of the computing job, restart execution of the computing job, migrate execution of the computing job from a first container to a second container, or terminate execution of the computing job.

The at least one execution condition may comprise a first condition and a second condition joined by a Boolean operator.

The instructions may further cause the processing device to monitor execution of the computing job to detect the at least one execution condition.

The at least one execution condition may comprise a budget for execution of the computing job and to modify execution of the computing job in response to detecting the at least one execution condition, the instructions may cause the processing device to stop execution of the computing job in response to execution of the job reaching the budget.

The at least one execution condition may comprise an execution start time and an execution stop time and to modify execution of the computing job in response to detecting the at least one execution condition, the instructions may cause the processing device to start execution of the computing job at the execution start time and stop execution of the computing job at the execution stop time.

The at least one execution condition may comprise an amount of output generated by the computing job, an amount of input consumed by the computing job, or an amount of execution time for the computing job, and to modify execution of the computing job in response to detecting the at least one execution condition, the instructions may cause the processing device to stop execution of the computing job in response to generation of the amount of output by the computing job, consumption of the amount of input by the computing job, or expiration of the amount of execution time for the computing job.

The one or more conditions may include an orchestration condition and the instructions to orchestrate execution of the computing job in the container may be generated based on the orchestration condition.

The orchestration condition may comprise an application-level sharding condition.

The method of claim 1, wherein the at least one execution condition comprises one or more conditions in a service level agreement.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the scope of the described embodiments.

To easily identify the discussion of any particular element or act, the most significant digit or digits in a reference number refer to the figure number in which that element is first introduced.
FIG. 1 illustrates an exemplary operating environment for supporting execution of jobs with container orchestration platforms according to some embodiments of the present disclosure.
FIG. 2 illustrates a process flow for orchestrating and executing a job in a manner that adheres to defined conditions and associated strategies according to some embodiments of the present disclosure.
FIG. 3 illustrates a process flow for utilizing a wrapped job to orchestrate, monitor, and execute a job according to some embodiments of the present disclosure.
FIG. 4 illustrates a flow diagram of a method for supporting execution of jobs based on conditions included in a wrapped job according to some embodiments of the present disclosure.
FIG. 5 illustrates a block diagram of an example system for supporting execution of jobs according to some embodiments of the present disclosure.
FIG. 6 illustrates a block diagram of an example system according to some embodiments of the present disclosure.

### DETAILED DESCRIPTION

The following description sets forth numerous specific details such as examples of specific systems, components, methods, and so forth, in order to provide a good understanding of various embodiments of the techniques described herein for supporting execution of jobs with a container orchestration platform. It will be apparent to one skilled in the art, however, that at least some embodiments may be practiced without these specific details. In other instances, well-known components, elements, or methods are not described in detail or are presented in a simple block diagram format in order to avoid unnecessarily obscuring the techniques described herein. Thus, the specific details set forth hereinafter are merely exemplary. Particular implementations may vary from these exemplary details and still be contemplated to be within the scope of the present disclosure.

Container orchestration platforms provide the ability to automate, manage, and coordinate some aspects of deployment, scaling, and operations of multiple containers across multiple host systems. For example, existing container orchestration platforms may provide some configuration that helps with dynamic reprovisioning, which is triggered by either a topology change or by the completion of workload execution, which may trigger a reschedule. However, existing container orchestration platforms are limited in their ability to provide finegrained control over workloads, such as jobs or batch jobs. For example, manually intensive creation and/or customization of code is required for a workload in order to achieve target orchestration and execution characteristics for the workload. This leads to a limited ability to accommodate many real-world use cases. For example, application-level sharding for a workload requires customized optimization logic. However, that logic is not visible to native users and can result in odd behavior where either a workload breaches a known service level agreement (SLA) or when a job terminates unexpectedly because one or more nuances were not accounted for. This creates various problems, such as migrating workloads to container orchestration platforms, which is typical in many data services scenarios, where it is usually assumed that a lift and shift works as well as a core problem for SLA enforcement. These limitations can drastically reduce the capabilities of container orchestration platforms as well as the efficiency, security, and policy enforcement in the orchestration and execution of workloads by container orchestration platforms, contributing to excessive resources demands, unreliable performance, policy violations, and systems, devices, and techniques with limited capabilities.

Accordingly, many embodiments disclosed hereby provide various techniques and features for supporting execution of workloads with container orchestration platforms via a layer of abstraction that can be utilized to support challenging real-world scenarios clients often face. More specifically, various embodiments provide techniques and features that handle specialized job workloads that execute at the most granular level of the container orchestration platform. In many embodiments, these techniques and features enhance existing systems by enabling container orchestration system to enforce conditions and strategies, such as SLAs. In several embodiments, jobs may be wrapped with characteristics of a workload (e.g., a job or batch job) that are tied to various conditions and strategies that are utilized to determine when execution of a workload should be modified (e.g., started, stopped, restarted, migrated, or terminated.

By wrapping the job with these characteristics tied to conditions and strategies, a disconnected layer of logic and control is provided that allows for workloads to both obey and enforce target conditions and strategies. Using this technique, a variety of strategies and conditions can be implemented to determine when and how execution of a workload should be modified. For example, at least one of time to live, total throughput, input data consumed, amount of output, cloud resources quota, asymmetrical cluster strategies (e.g., cause jobs to run preferentially on cheaper computational units), or budgets (e.g., environmental, processing, resource, etc.) may be utilized to determine when execution of a workload should be modified. Additionally, the techniques and features provide the ability to store lifecycle-related information, such as saving the state of a half-completed long-running job, and federate this as a strategy. For example, such a job may be exported externally from a first cluster to a second cluster that resumes execution. In some embodiments, this capability may be utilized to facilitate dedicated and optimized clusters for various parts of the lifecycle of a job and/or enable a continuous integration style system. Accordingly, embodiments described hereby provide tools for supporting execution of workloads with container orchestration platforms in an efficient, accurate, and customizable manner. In several embodiments, these techniques and features may be implemented via a plug-in or extension for a container orchestration platform.

In these and other ways, components/techniques described hereby may provide many technical advantages for supporting execution of workloads with container orchestration platforms. For example, customized conditions and strategies can be reliably and efficiently applied to workloads. Therefore, the computer-based techniques of the current disclosure improve the functioning of container orchestration systems and workload execution, resulting in better performance and improved capabilities as compared to conventional approaches. Therefore, embodiments disclosed hereby can be practically utilized to improve the functioning of a computer and/or to improve a variety of technical fields including container orchestration, workload execution, policy enforcement, computing efficiency, distributed computing, and data security.

These illustrative examples are given to introduce the reader to the general subject matter discussed here and are not intended to limit the scope of the disclosed concepts. The following sections describe various additional features and examples with reference to the drawings in which like numerals indicate like elements but, like the illustrative examples, should not be used to limit the present disclosure.

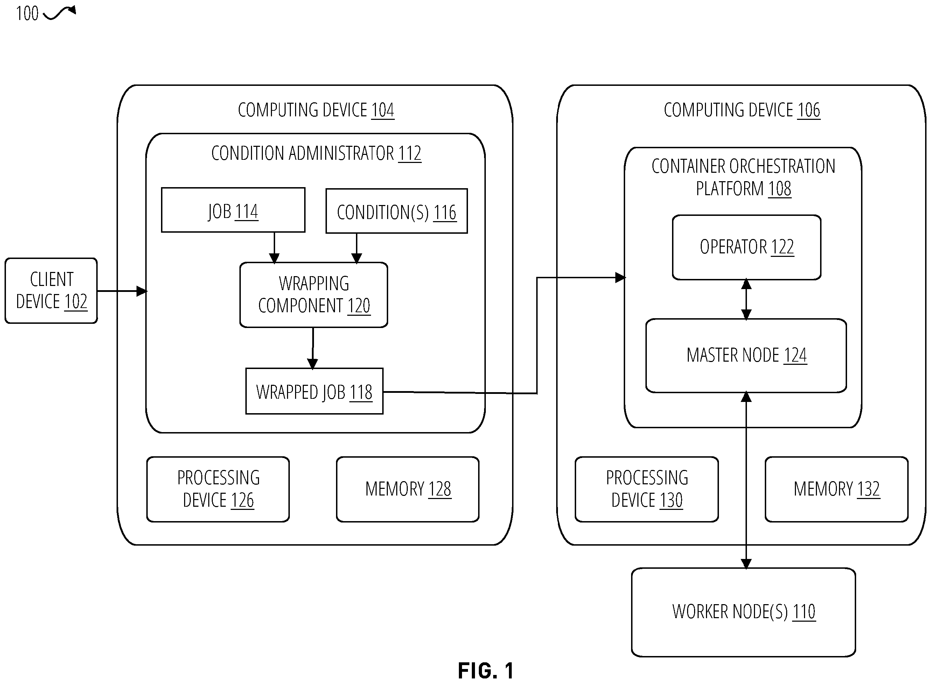

FIG. 1 illustrates an operating environment 100 for supporting execution of jobs with container orchestration platforms according to some embodiments. Operating environment 100 includes a client device 102, a first computing device 104, a second computing device 106, and one or more worker nodes 110. The first computing device 104 includes a condition administrator 112, a processing device 126, and a memory 128. The condition administrator 112 includes a wrapping component 120 that can generate a wrapped job 118 based on a job 114 and one or more conditions 116. The second computing device 106 includes a container orchestration platform 108, a processing device 130, and a memory 132. The container orchestration platform 108 may include an operator 122 and a master node 124. The operator 122 may receive and utilize the wrapped job 118 to cause the master node 124 to orchestrate and execute the job 114 on at least a portion of the one or more worker nodes 110 according to the one or more conditions 116. One or more components of FIG. 1 may be the same or similar to one or more other components disclosed hereby. Further, aspects discussed with respect to various components in FIG. 1 may be implemented by one or more other components from one or more other embodiments without departing from the scope of this disclosure. For example, the condition administrator 112 may be included in the master node 124 without departing from the scope of this disclosure. In another example, the operator 122 may be external to the container orchestration platform 108 and/or be implemented on a computing device separate from the computing device implementing the container orchestration platform 108 without departing from the scope of this disclosure. Embodiments are not limited in this context.

Generally, the condition administrator 112 and the operator 122 may function to provide a layer of abstraction that can be utilized to provide support for handling scenarios and implementing strategies associated with the execution of workloads (e.g., jobs or batch jobs) in containers, such as based on conditions 116 included in wrapped job 118. For example, if a condition is detected (e.g., violation or satisfaction of a condition is detected), execution of the job 114 may be modified. In many embodiments, the wrapped job 118 may describe the characteristics of a workload that are tied to one or more conditions utilized to determine when execution of the job should be modified (e.g., started, stopped, restarted, migrated, or hard terminated). Accordingly, in addition to the job 114 and the conditions 116, the wrapped job 118 may indications of one or more characteristics of the job 114.

In various embodiments, the wrapping component 120 of condition administrator 112 may generate wrapped job 118 based on the job 114 (including characteristics of the job) and the one or more conditions 116. In many embodiments, the wrapping component 120 may implement a wrapper function. The wrapper function may be utilized to abstract away implementational details (e.g., of the container orchestration platform 108) associated with various conditions and strategies. By abstracting away implementational details, the conditions and strategies can be implemented without specialized knowledge or customized logic. Further, wrapping the job 114 with these characteristics and/or conditions provides a disconnected layer of logic and control that allows for workloads to both obey and enforce target conditions and strategies. Using this technique, a variety of strategies and conditions can be implemented to determine when and how execution of a workload should be modified. In any embodiments, the techniques described hereby may facilitate pluggable declarative termination strategies.

In various embodiments, one or more of the job 114 and at least a portion of the conditions 116 may be defined, or provided, by the client device 102. Additionally, or alternatively, at least a portion of the conditions 116 may be defined, or provided, by the service, server, and/or system side that the client device 202 interfaces with (e.g., computing device 104). For example, conditions may be included in, or determined based on, a service level agreement on the service, server, and/or system side. In many embodiments, the inner workings of the SLA mechanism are hidden from the client, such as in order to provide a protection mechanism to ensure the SLA is not breached.

The wrapped job 118 may be provided to the operator 122, which in turn, causes the job 114 to be orchestrated and executed according to the conditions 116 via the container orchestration platform 108. In various embodiments, the container orchestration platform 108 may assemble one or more computers, which may include virtual or physical machines, into a group of worker nodes (e.g., worker nodes 110) that can run workloads in containers. For example, the container orchestration platform 108 may include, utilize, or implement a Kubernetes^{™} cluster. A Kubernetes cluster may refer to a master node (e.g., master node 124) and one or more worker nodes (e.g., worker nodes 110). More generally, the master node 124 may host control plane components.

Further, the master node 124 may hold configuration and state data used to maintain a desired state. The control plane may maintain communication with the worker nodes 110 in order to schedule containers efficiently. In many embodiments, the control plan may run across multiple nodes to provide redundancy. The worker nodes 110 may run pods. Pods may include single instances of an application, containers may run inside of pods, and workloads may be executed within the containers. In various embodiments disclosed hereby, the condition administrator 112 may interact with the master node 124 to control how workloads are orchestrated and executed by the worker nodes 110. For example, the operator 216 may interact with the master node 124 via an application programming interface (API) of the master node 124. In one embodiment, the operator 216 may include a plug-in or an extension for the container orchestration platform 206. In many embodiments, the operator 216 may monitor orchestration and execution parameters of a job, such as to enforce one or more conditions or strategies.

The conditions 116 may include a variety of parameters, thresholds, characteristics, triggers, and the like. In many embodiments, various conditions 116 may be joined with one or more other conditions, such as by Boolean operators. For example, the conditions can be configured such that if a first condition and a second condition occur, then execution of a workload is stopped. In a further example, if a third condition or a fourth condition occur, then execution of the workload is restarted. In another example, the conditions can be configured such that if a first condition or a second condition occurs, then execution of the workload is migrated from a first worker node to a second worker node. Further, in many embodiments, conditions may be directed to characteristics of the worker nodes. For example, a workload may only be executed on worker nodes that meet an efficiency threshold. Accordingly, the conditions 116 may be utilized to enable a variety of behaviors, scenarios, and strategies.

One or more conditions may be utilized and configured to implement one or more of the following strategies to determine when to stop or terminate a job. In some embodiments, a time to live strategy may be implemented to provide a job with an allotted amount of time to run, such as when the job is an optimization problem. In various embodiments, a total throughput strategy may be implemented. In various such embodiments, the total throughput strategy may include one or more sub-strategies. In many embodiments, a quota of discrete input data consumption strategy may be implemented. In several embodiments, an amount of output strategy may be implemented. In several such embodiments, the amount of output strategy may be implemented at a logical (e.g., number of entities) or physical (e.g., number of bytes) level. In some embodiments, a cloud resources quota strategy may be implemented. In some such embodiments, the cloud resources quota strategy may utilize or enable an indirect measurement of the economic impact of a specific job. In various embodiments, an asymmetrical cluster strategy may be implemented. In various such embodiments, the asymmetrical cluster strategy may cause a job to preferentially run on work nodes that utilize cheaper computational units. Further, the job may always be required to run on the cheaper computational units or depending on a more complex total costs logic. In many embodiments, an environmental budget strategy may be implemented, such as based on the ecological impacts of running such a job. In several embodiments, pluggable strategies may be implemented. For example, a pluggable strategy implementing a specific serial peripheral interface (SPI) that developers can utilized to extend various behaviors and strategies.

Further, one or more of these strategies may be combined, such as using Boolean logic as described above. For example, input quota and environmental budget strategies may be utilized and whichever threshold (e.g., quota or budget) is reached first causes the job to be terminated. In several embodiments, various strategies may be predefined with conditions. For example, condition administrator 112 may be able to map strategies to a set of corresponding conditions. In several such embodiments, the client device 102 may provide the condition administrator 112 with a strategy identifier and the corresponding conditions may be identified and utilized by condition administrator 112 based on a mapping.

Accordingly, embodiments disclosed hereby provide techniques and features for supporting execution of workloads with container orchestration platforms via a layer of abstraction that can be utilized to support challenging real-world scenarios clients often face. Further, embodiments provide techniques and features that handle specialized job workloads that execute at the most granular level of the container orchestration platform (e.g., the container or pod). As described above, these techniques and features enhance existing systems by enabling container orchestration system to enforce conditions and strategies, such as SLAs. Additionally, the techniques and features can provide the ability to store lifecycle-related information and federate this as a strategy. For example, the state of a half-completed long-running job may be saved and the job may be exported externally from a first cluster to a second cluster that resumes execution. In some embodiments, this capability may be utilized to facilitate dedicated and optimized clusters for various parts of the lifecycle of a job and/or enable a continuous integration style system. In some such embodiments, destinations addresses may be derived, such as by the condition administrator 112 and/or operator 122, to support conveyor belt style performance of jobs.

It should be noted that although a single processing device 126, 130 and a single memory 128, 132 are depicted in each of the computing devices 104, 106 of FIG. 1 for simplicity, other embodiments may include multiple processing devices, storage devices, or devices. Processing devices 126, 130 may include a complex instruction set computing (CISC) microprocessor, reduced instruction set computing (RISC) microprocessor, very long instruction word (VLIW) microprocessor, or a processor implementing other instruction sets or processors implementing a combination of instruction sets. Processing devices 126, 130 may also include one or more special-purpose processing devices such as an application specific integrated circuit (ASIC), a field programmable gate array (FPGA), a digital signal processor (DSP), network processor, or the like. Further details regarding supporting execution of jobs with container orchestration platforms will be discussed below.

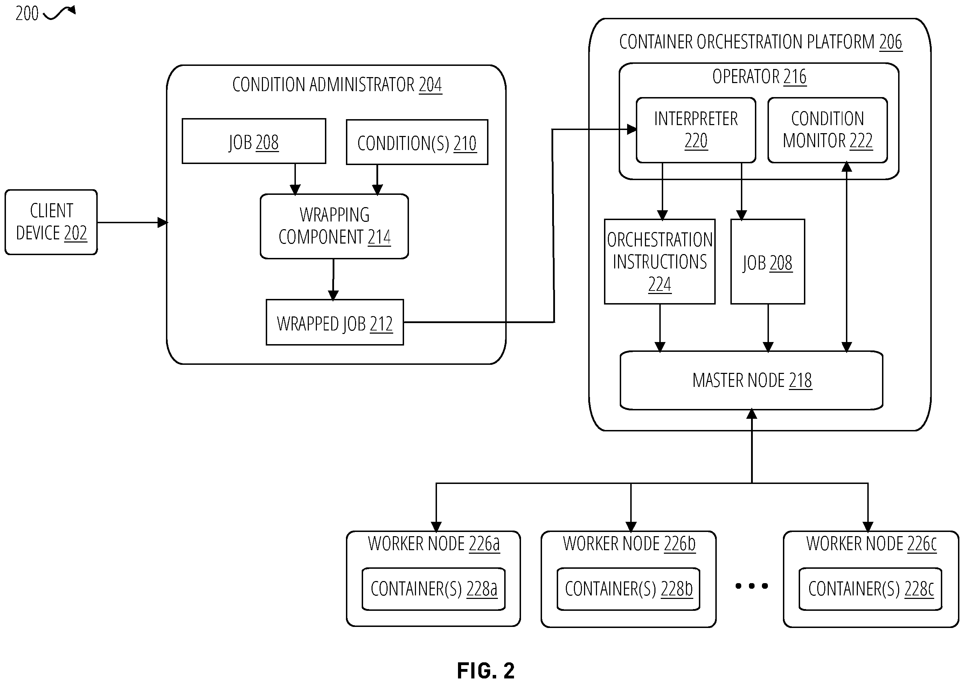

FIG. 2 illustrates a process flow 200 for orchestrating and executing a job in a manner that adheres to defined conditions and associated strategies according to some embodiments of the present disclosure. For example, process flow 200 may support generating a wrapped job 212 and orchestrating and executing the job 208 in one or more containers 228a, 228b, 228c (collectively referred to as containers 228) of one or more worker nodes 226a, 226b, 226c (collectively referred to as worker nodes 226) based on one or more conditions 210 included in the wrapped job 212. One or more components of FIG. 2 may be the same or similar to one or more other components disclosed hereby. For example, condition administrator 204, or one or more components thereof, may be the same or similar to condition administrator 112, or one or more components thereof. In another example, operator 216, or one or more components thereof, may be the same or similar to operator 122, or one or more components thereof. Further, aspects discussed with respect to various components in FIG. 2 may be implemented by one or more other components from one or more other embodiments without departing from the scope of this disclosure. For example, operator 216 and/or its functionality may be implemented by within master node 218 without departing from the scope of this disclosure. In another example, the condition administrator 204 and/or its functionality may be implemented by the client device 202 without departing from the scope of this disclosure. Embodiments are not limited in this context.

In process flow 200, the client device 202 may provide data to condition administrator 204 defining a job 208 and one or more conditions (e.g., a portion or all of conditions 210) for orchestrating and/or executing the job. In some embodiments, the client device 202 may additionally, or alternatively, provide one or more characteristics, parameters, configurations, and the like describing the workload. In some such embodiments, the characteristics, parameters, configurations, and the like may be included in the conditions. In one embodiment, characteristics, parameters, configurations, and the like of the job 208 may be associated with various conditions. For example, a condition may include stopping the job 208 if the provided configuration of the job 208 or topology of the cluster is modified at any time. In various embodiments, conditions 210 may include a location or identification of one or more values or parameters to utilize in detecting a condition. For example, a condition may identify a tool, such as in an observability stack, to utilize to determine whether or not an environmental budget has been reached.

In some embodiments, the conditions 210 may include, or be referred to as, orchestration conditions and/or execution conditions. Generally, orchestration conditions may correspond to configuring and arranging execution of the job and execution conditions may correspond to controlling and/or modifying execution of the job. For example, an orchestration condition may indicate how sharding should be performed for a job and an execution condition may indicate when to modify (e.g., start, stop, restart, etc.) execution of a job. Thus, in various embodiments, an orchestration condition may include a sharding condition (e.g., an application-level sharding condition). In another example, an orchestration condition may include a region or type of cluster to execute a job on. In yet another example, an orchestration condition may identify clusters upon which to perform various stages of the job's life cycle. In many embodiments, example, an execution condition may include a trigger to modify execution of a job (e.g., thresholds, windows, budgets, etc.) For example, an execution condition may indicate a periodic window of time for executing a job, such as daily between 12am and 4am local time. In another example, an execution condition may include an execution start time and execution stop time.

Referring back to process flow 200, the condition administrator 204 may receive the data from the client device 202. In some embodiments, the condition administrator 204 may add data to the data provided by client device 202. For example, condition administrator 204 may add one or more conditions based on service, server, and/or system side data (e.g., an SLA). Based on the job 208 and the conditions 210, the wrapping component 214 of condition administrator 204 may produce wrapped job 212. In various embodiments, the wrapped job 212 may include the job 208 wrapped with the one or more conditions 210. In one embodiment, the wrapper may store, or be used to store, state information, such as the stat of a half-completed long-running job. More generally, state information may be stored, or caused to be stored, by one or more of the condition administrator 204 and the operator 216.

The wrapped job 212 may be sent to the operator 216. Based on the wrapped job 212, the interpreter 220 of operator 216 may determine orchestration instructions 224 and job 208. The orchestration instructions 224 and the job 208 may be passed to the master node 218. The master node 218 may then utilize the orchestration instructions 224 and job 208 to cause execution of the job 208 in one or more of the containers 228 on one or more of the worker nodes 226. Additionally, the condition monitor 222 may be configured based on the wrapped job 212. For example, the condition monitor 222 may be configured to monitor various parameters at various locations to detect a condition (e.g., when the condition is satisfied and/or violated. In another example, the condition monitor 222 may be configured with how to modify execution of jobs based on detection of conditions. In many embodiments, in response to the condition monitor 222 detecting a condition, instructions to modify execution of the job 208.

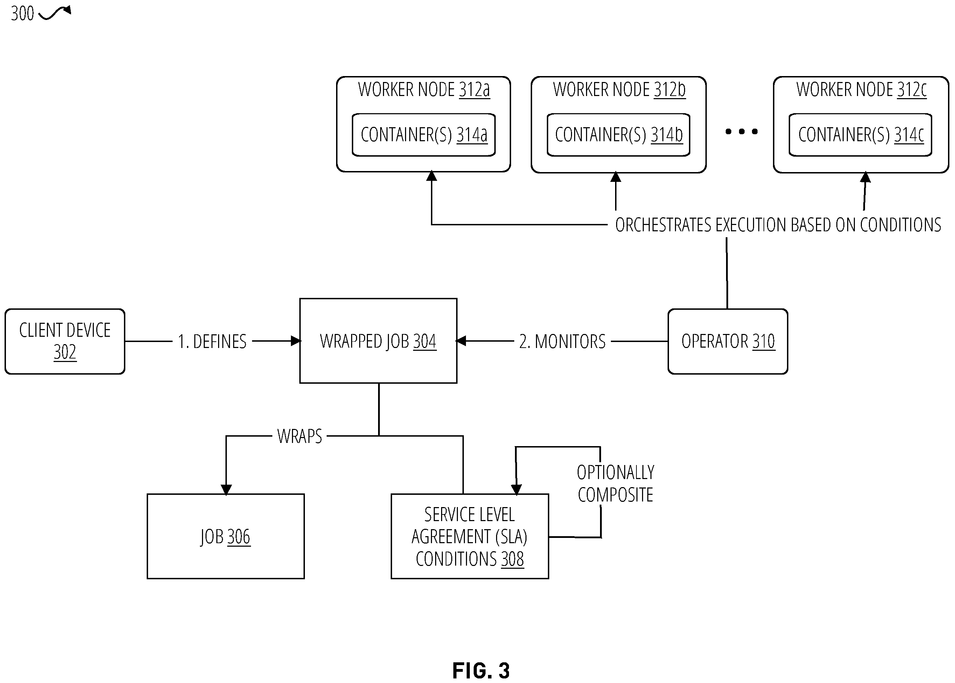

FIG. 3 illustrates a process flow 300 for utilizing a wrapped job to orchestrate, monitor, and execute a job according to some embodiments. For example, process flow 300 may support orchestration, monitoring, and execution of a job 306 by one or more containers 314a, 314b, 314c (collectively referred to as containers 314) on one or more worker nodes 312a, 312b, 312c (collectively referred to as worker nodes 312) according to various client defined and SLA conditions. One or more components of FIG. 3 may be the same or similar to one or more other components disclosed hereby. For example, operator 310, or one or more components thereof, may be the same or similar to operator 216, or one or more components thereof. In another example, worker nodes 312 and/or containers 314 may be the same or similar to worker nodes 226 and/or containers 228. Further, aspects discussed with respect to various components in FIG. 3 may be implemented by one or more other components from one or more other embodiments without departing from the scope of this disclosure. For example, operator 310 may be implemented by computing device 106 without departing from the scope of this disclosure. Embodiments are not limited in this context.

In process flow 300, the client device 302 may define various aspects of the wrapped job 304 (e.g., by providing job definitions, conditions, etc.). The client device 302 may include a computing device that provides data associated with execution of a job. In some embodiments, the client device 302 may provide data in response to instructions provided by one or more entities, such as users, developers, or autonomous entities (e.g., applications, automated processes, and the like).

As previously discussed, the wrapped job 304 may be a job 306 wrapped in conditions provided by the client device 302 and/or SLA strategy 308. In some embodiments, the SLA strategy 308 may be composite. For example, various SLA strategy 308 may be joined by one or more Boolean operators. The operator 310 may orchestrate execution of the job 306 in one or more containers 314 of one or more worker nodes 312 based on one or more conditions in the wrapped job 304. Further, the operator 310 may monitor one or more conditions in the wrapped job 304 and modify execution of the job in response to detecting conditions (e.g., violation or satisfaction of conditions). In many embodiments, the operator 310 may have an indirect relationship with the worker nodes 312 and/or containers 314. In various such embodiments, the operator 310 may orchestrate and/or monitor via modifications of jobs or other workflows representing logical entities. For example, other components of a container orchestration platform, such as a master node, may receive requests from the operator 310 and then modify the system based on the requests.

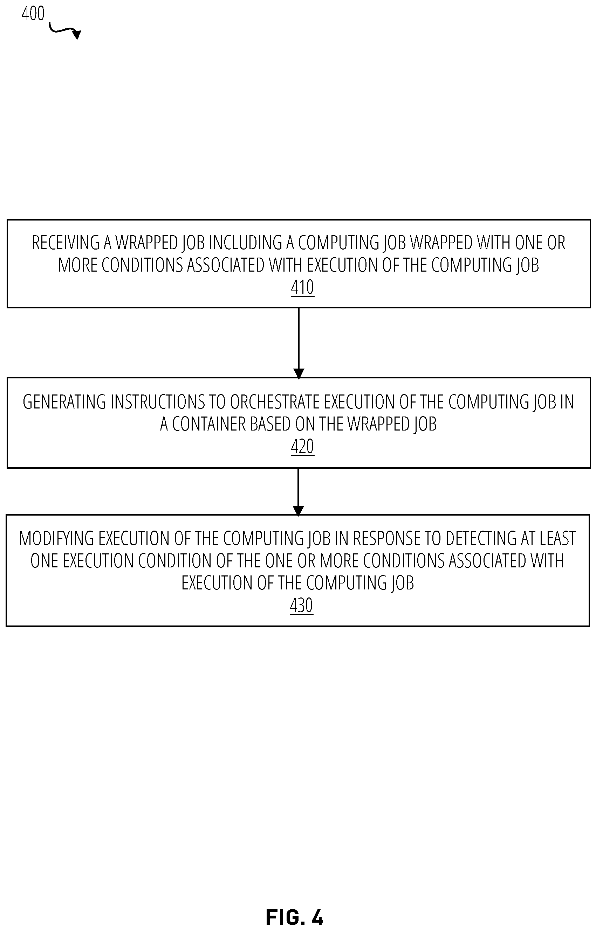

FIG. 4 is a flow diagram of a method 400 for supporting execution of jobs based on conditions included in a wrapped job according to some embodiments. Method 400 may be performed by processing logic that may include hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, at least a portion of method 400 may be performed through the execution of operator 112 by processing device 130 of FIG. 1.

With reference to FIG. 4, method 400 illustrates example functions used by various embodiments. Although specific function blocks ("blocks") are disclosed in method 400, such blocks are examples. That is, embodiments are well suited to performing various other blocks or variations of the blocks recited in method 400. It is appreciated that the blocks in method 400 may be performed in an order different than presented, and that not all of the blocks in method 400 may be performed.

Method 400 begins at block 410, where the processing logic receives a wrapped job including a computing job wrapped with one or more conditions associated with execution of the computing job. For example, operator 216 may receive wrapped job 212 including job 208 and conditions 210 associated with execution of the job 208. In some embodiments, the conditions 210 may be received from client device 202 and/or be on the service, server, and/or system side that the client device 202 interfaces with. For example, conditions may be included in, or determined based on, a service level agreement on the service, server, and/or system side.

At block 420, the processing logic generates instructions to orchestrate execution of the computing job in a container based on the wrapped job. For example, interpreter 220 of operator 216 may generate orchestration instructions 224 to orchestrate execution of the job 208 in one or more of the containers 230 of worker nodes 228. In some embodiments, the orchestration instructions 224 may be provided to master node 218 and the master node 218 may utilize the orchestration instructions 224 to orchestrate execution of the job 208 in one or more of the containers 230 of worker nodes 228. In various embodiments, the orchestration instructions 224 may dictate how sharding is performed for the job. For example, the orchestration instructions 224 may indicate how to perform application-level sharding for the job 208.

Continuing to block 430, the processing logic modifies execution of the computing job in response to detecting at least one execution condition of the one or more conditions associated with execution of the job. For example, condition monitor 222 of operator 216 may stop execution of job 208 in one or more of the containers 230 of worker nodes 228 in response to detecting an environment budget for execution of the job 208 has been reached. In another example, condition monitor 222 of operator 216 may stop execution of job 208 in one or more of the containers 230 of worker nodes 228 in response to detecting generation of a specified amount of output by the job 208, consumption of a specified amount of input by the job 208, or expiration of a specified amount of execution time for the job 208. In some embodiments, execution of a job may be modified by causing the master node 218, or other components of the container orchestration platform 206, to modify the job accordingly. For example, condition monitor 222 may provide instructions to the master node 218 to cause the master node 218 to start, stop, restart, migrate, or terminate execution of the job 208.

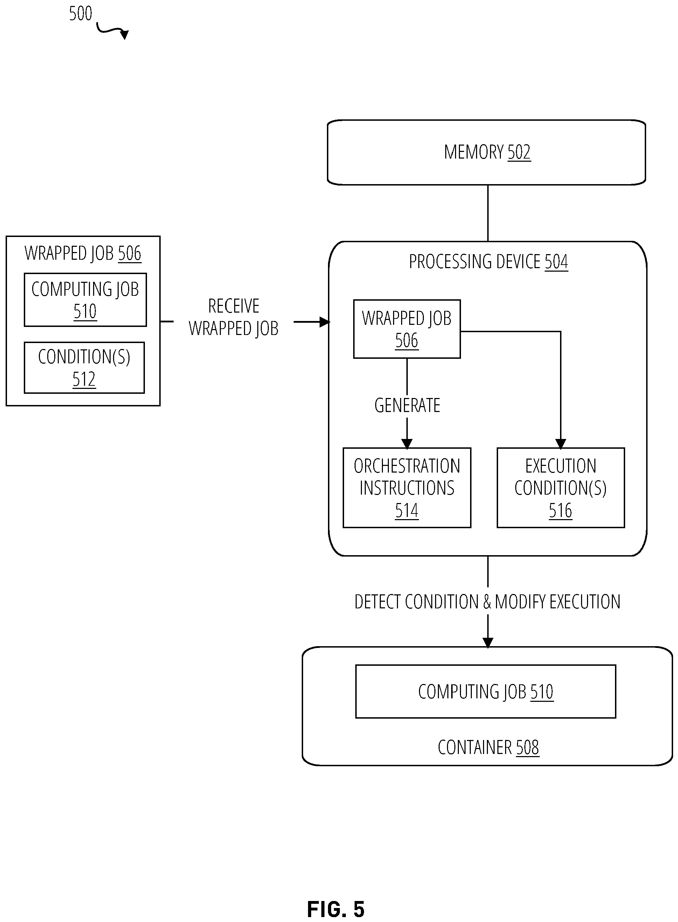

FIG. 5 illustrates a block diagram of a system 500 for supporting execution of jobs according to some embodiments. In the illustrated embodiment, system 500 includes a memory 502, a processing device 504, wrapped job 506, and a container 508. It should be noted that some components of system 500 are shown for illustrative purposes only and are not physical components of the system 500, such as wrapped job 506, computing job 510, conditions 512, orchestration instructions 514, and execution conditions 516. One or more components of FIG. 5 may be the same or similar to one or more other components disclosed hereby. For example, processing device 504 may be the same or similar to processing device 130. Further, aspects discussed with respect to various components in FIG. 5 may be implemented by one or more other components from one or more other embodiments without departing from the scope of this disclosure. For example, at least one of the one or more conditions 512 may be included in memory 502 without departing from the scope of this disclosure. Embodiments are not limited in this context.

In system 500, the processing device 504 may receive wrapped job 506 including computing job 510 and conditions 512. In various embodiments, wrapped job 506 may generated by a condition administrator (e.g., condition administrator 204) based on a client defined job, one or more client defined conditions, and/or one or more service, server, and/or system side conditions. For example, one or more portions of conditions 512 may be received as user input provided via a client device and one or more portions of conditions 512 may be included in SLAs.

In response to receiving wrapped job 506, the processing device 504 may generate orchestration instructions 514 and identify one or more execution conditions 516 for detection. Further, the processing device 504 may utilize the orchestration instructions 514 and/or execution conditions 516 to cause the computing job 510 to be executed in container 508 in a target manner. In many embodiments, the orchestration instructions 514 may be generated, at least in part, based on one or more of the conditions 512. During execution of the computing job 510, the processing device 504 may detect one or more of the conditions 512 (e.g., satisfaction or violation of an execution condition) and, in response, modify execution of the job (e.g., start, stop, restart, migrate, terminate the job). In some embodiments, the processing device 504 may monitor execution of the computing job 510 to detect a condition. In various embodiments, the processing device 504 may cause execution of the computing job 510 to move to a different container (e.g., migrate) in the same or a different cluster.

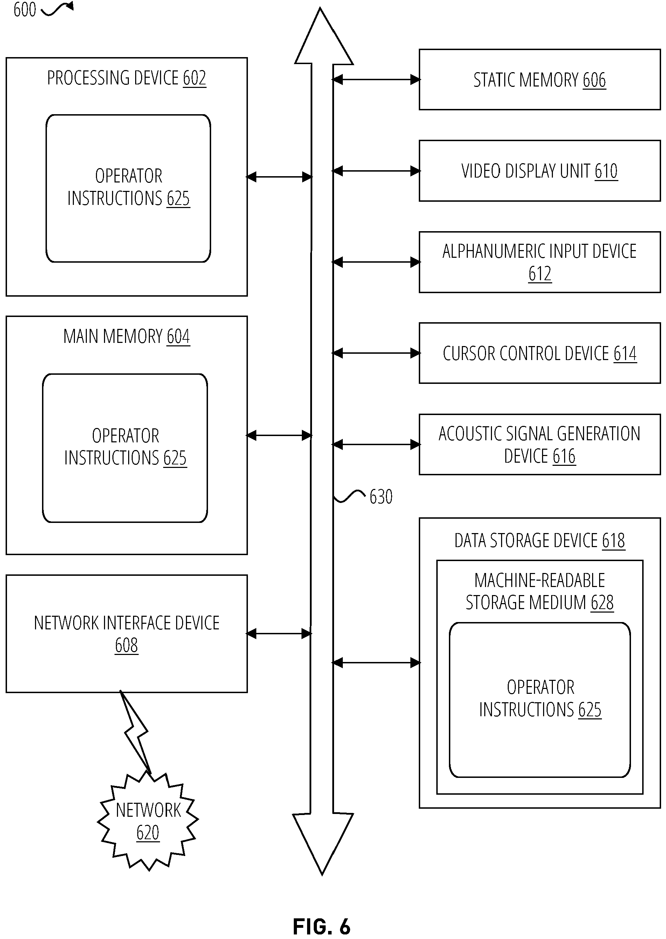

FIG. 6 is a block diagram of an example computing device 600 that may perform one or more of the operations described herein, in accordance with some embodiments of the disclosure. Computing device 600 may be connected to other computing devices in a LAN, an intranet, an extranet, and/or the Internet. The computing device may operate in the capacity of a server machine in client-server network environment or in the capacity of a client in a peerto-peer network environment. The computing device may be provided by a personal computer (PC), a set-top box (STB), a server, a network router, switch or bridge, or any machine capable of executing a set of instructions (sequential or otherwise) that specify actions to be taken by that machine. Further, while only a single computing device is illustrated, the term "computing device" shall also be taken to include any collection of computing devices that individually or jointly execute a set (or multiple sets) of instructions to perform the methods discussed herein.

The example computing device 600 may include a processing device 602 (e.g., a general purpose processor, a PLD, etc.), a main memory 604 (e.g., synchronous dynamic random access memory (DRAM), read-only memory (ROM)), a static memory 606 (e.g., flash memory and a data storage device 618), which may communicate with each other via a bus 630.

Processing device 602 may be provided by one or more general-purpose processing devices such as a microprocessor, central processing unit, or the like. In an illustrative example, processing device 602 may include a complex instruction set computing (CISC) microprocessor, reduced instruction set computing (RISC) microprocessor, very long instruction word (VLIW) microprocessor, or a processor implementing other instruction sets or processors implementing a combination of instruction sets. Processing device 602 may also include one or more special-purpose processing devices such as an application specific integrated circuit (ASIC), a field programmable gate array (FPGA), a digital signal processor (DSP), network processor, or the like. The processing device 602 may execute the operations described herein, in accordance with one or more aspects of the present disclosure, for performing the operations and steps discussed herein.

Computing device 600 may further include a network interface device 608 which may communicate with a network 620. The computing device 600 also may include a video display unit 610 (e.g., a liquid crystal display (LCD) or a cathode ray tube (CRT)), an alphanumeric input device 612 (e.g., a keyboard), a cursor control device 614 (e.g., a mouse) and an acoustic signal generation device 616 (e.g., a speaker). In one embodiment, video display unit 610, alphanumeric input device 612, and cursor control device 614 may be combined into a single component or device (e.g., an LCD touch screen).

Data storage device 618 may include a machine-readable storage medium 628 on which may be stored one or more sets of instructions 625 that may include instructions for a component (e.g., one or more components of condition administrator 112, operator 216, and/or master node 218) for carrying out the operations described herein, in accordance with one or more aspects of the present disclosure. Instructions 625 may also reside, completely or at least partially, within main memory 604 and/or within processing device 602 during execution thereof by computing device 600, main memory 604 and processing device 602 also constituting computer-readable media. The instructions 625 may further be transmitted or received over a network 620 via network interface device 608.

While machine-readable storage medium 628 is shown in an illustrative example to be a single medium, the term "computer-readable storage medium" should be taken to include a single medium or multiple media (e.g., a centralized or distributed database and/or associated caches and servers) that store the one or more sets of instructions. The term "computer-readable storage medium" shall also be taken to include any medium that is capable of storing, encoding, or carrying a set of instructions for execution by the machine and that cause the machine to perform the methods described herein. The term "computer-readable storage medium" shall accordingly be taken to include, but not be limited to, solid-state memories, optical media, and magnetic media.

Unless specifically stated otherwise, terms such as "receiving," "generating," "modifying," "monitoring", or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may include a general purpose computing device selectively programmed by a computer program stored in the computing device. Such a computer program may be stored in a computer-readable non-transitory storage medium.

The methods and illustrative examples described herein are not inherently related to any particular computer or other apparatus. Various general purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting. As used herein, the term "and/or" includes any and all combination of one or more of the associated listed items.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the invention is not to be limited to the details given herein, but may be modified within the scope of the appended claims.

## Claims

1. A method comprising:
receiving a wrapped job comprising a computing job wrapped with a plurality of conditions associated with execution of the computing job;
generating instructions to orchestrate execution of the computing job in a container based on the wrapped job; and
modifying, by a processing device, execution of the computing job in response to detecting at least one execution condition of the plurality of conditions associated with execution of the computing job.

2. The method of claim 1, wherein modifying execution of the computing job comprises at least one of starting, by the processing device, execution of the computing job, stopping, by the processing device, execution of the computing job, restarting, by the processing device, execution of the computing job, migrating, by the processing device, execution of the computing job from a first container to a second container, or terminating, by the processing device, execution of the computing job.

3. The method of claim 1, wherein the at least one execution condition comprises a first condition and a second condition joined by a Boolean operator.

4. The method of claim 1, further comprising monitoring execution of the computing job to detect the at least one execution condition.

5. The method of claim 1, wherein the at least one execution condition comprises a budget for execution of the computing job and modifying execution of the computing job in response to detecting the at least one execution condition comprises stopping, by the processing device, execution of the computing job in response to execution of the job reaching the budget.

6. The method of claim 1, wherein the at least one execution condition comprises an execution start time and an execution stop time and modifying execution of the computing job in response to detecting the at least one execution condition may comprise starting, by the processing device, execution of the computing job at the execution start time and stopping, by the processing device, execution of the computing job at the execution stop time.

7. The method of claim 1, wherein the at least one execution condition comprises an amount of output generated by the computing job, an amount of input consumed by the computing job, or an amount of execution time for the computing job, and modifying execution of the computing job in response to detecting the at least one execution condition comprises stopping, by the processing device, execution of the computing job in response to generation of the amount of output by the computing job, consumption of the amount of input by the computing job, or expiration of the amount of execution time for the computing job.

8. The method of claim 1, wherein the plurality of conditions include an orchestration condition and the instructions to orchestrate execution of the computing job in the container are generated based on the orchestration condition.

9. The method of claim 8, wherein the orchestration condition comprises an application-level sharding condition.

10. The method of claim 1, wherein the at least one execution condition comprises one or more conditions in a service level agreement.

11. A system comprising:
a memory; and
a processing device, operatively coupled to the memory, configured to perform the method of any of claims 1 to 10.

12. A non-transitory computer-readable storage medium including instructions that, when executed by a processing device, cause the processing device to perform the method of any of claims 1 to 10.
